# EUROPEAN PATENT APPLICATION

(11) **EP 2 439 177 A1**
(43) Date of publication of application: **11.04.2012**
(21) Application number: 11182206.0
(22) Date of filing: 21.09.2011
(51) Int. Cl.: C02F 1/44, C02F 1/76, B01D 61/14, C02F 1/28, C02F 9/00, C02F 1/32, C02F 1/00, C02F 1/467

(54) **Device and method for purifying water**

(30) Priority: 05.10.2010 NL 2005454
(71) Applicant: Bucon B.V., 2861 WC Bergambacht (NL)
(72) Inventor: Bulsing, Peter, 2861 WC BERGAMBACHT (NL)
(74) Representative: Algemeen Octrooi- en Merkenbureau

(57) **Abstract**

A device for purifying water, making use of a membrane filter and pipes and pumps needed for that purpose, which device comprises a supply line for water to be purified, which supply line is connected to at least one filter unit, the discharge line of which at least one filter unit is connected to a storage tank for the thus treated water, which storage tank is provided with a discharge line for purified water, whilst one or more purification units are disposed between the filter unit and the storage tank, wherein at least one purification unit comprises a disinfectant dosaging system.

## Description

The present invention relates to a device for purifying water, making use of a membrane filter. The present invention further relates to a method for purifying surface water, groundwater and spring water (fresh water and moderately brackish water).

The device referred to in the introduction is known per se from U.S. Pat. No. 4,780,200. In said US patent the water to be purified is supplied to a tank via a reverse osmosis membrane filter, after which the thus pre-purified water is subjected to a number of additional purification steps, inter alia comprising organic adsorption, ion exchanger, microfiltration unit and photooxidation.

From German Offenlegungsschrift DE 102 05 940 there is known a transportable water purification device in which the water to be purified is stored in a tank and subsequently carried to an active carbon filter via a pump. The thus treated water is subsequently treated in an ultra- or nanofiltration membrane and discharged to a storage tank. The water exiting the storage tank may additionally be passed through a UV radiation unit.

According to U.S. Pat. No. 5,389,254, the water to be purified enters a system via a conduit and is supplied to two pre-filters, which filters are of the so-called cartridge type. The thus pre-treated water is then supplied to a reverse osmosis unit, passed through a carbon filter and finally supplied to a storage tank.

European application EP 2 119 677 discloses a purification device in which the water to be purified is supplied to a sediment filter and subsequently to a carbon filter. Following that, the water thus treated is supplied to a reverse osmosis filter and subsequently to a carbon filter.

U.S. Pat. No. 5,174,901 relates to a purification plant in which the liquid to be purified is passed through a sand filter, a carbon filter and a softening plant. The water thus treated is stored in a storage tank, after which reverse osmosis purification takes place.

From U.S. Pat. No. 6,416,668 there is known a membrane process for purifying surface water, wherein drinking water is eventually prepared in a number of process steps, including microfiltration membranes and ultrafiltration membranes.

British publication GB 2 197 860 relates to a water purification process in which an ultrafiltration membrane is used.

In public institutions such as hospitals, hotels, universities but also permanent and semipermanent communes, there is a need for safe and tasty drinking water, not only for consumption purposes, but also for toilet and shower use. However, the demand for such water is not constant over a twenty-four hour period. After all, especially in hotels the demand for water in particular during the morning and evening hours will differ significantly from the water requirements during the afternoon. Existing systems (mainly RO (reverse osmosis) plants), however, are dimensioned to satisfy peak requirements, so that the utilisation of the available capacity is low during a large part of the day, which is undesirable from a cost point of view. Moreover, RO systems will quickly become foiled (high maintenance) if the undissolved microorganisms and bacteria are not completely removed via a pre-filtration process.

The object of the present invention is to provide a device for purifying water which obviates the above problems and by means of which in particular consumption quality water is prepared.

Another object of the present invention is to provide a device for purifying water which has a modular structure, which is easy to transport and which can be installed within a short period of time at any desired location.

Yet another object of the present invention is to provide a device for purifying water which can be installed while making use of the existing water supply system.

The present device, comprising a supply line for water to be purified, which supply line is connected to at least one filter unit, the discharge line of which at least one filter unit is connected to a storage tank for the thus treated water, which storage tank is provided with a discharge line for purified water, whilst one or more purification units are disposed between the filter unit and the storage tank, is characterized in that at least one purification unit comprises a disinfectant dosaging system.

One or more of the above objects are accomplished by implementing the aforesaid aspects.

As a result of the dosaging of disinfectant to the water that has already been passed through a filter unit, the water present in the storage tank can retain its desired consumption quality. The presence of disinfectant is advantageous not only from the viewpoint of the disinfecting effect on the water, but it also has a cleaning effect on the water system and the pumps, vessels and tanks that are used. This reduces the need to use harmful chemicals.

The disinfectant dosaging system used in the present application is preferably based on so-called anodic oxidation, in which use is made of the salts that are naturally present in the water to be purified, in particular NaCl, in the presence of electrodes in an electrolysis cell. In such an embodiment the aqueous flow is exposed to a low voltage between electrodes wherein, in addition to sodium hypochlorite, chlorides are obtained from the water through electrolysis. The hypochlorite has a strongly disinfecting effect and the pathogens that are present, such as viruses, bacteria and other microorganisms, will be killed.

The disinfectant dosaging system furthermore preferably comprises a circulation system. Such a system preferably comprises a flow sensor which controls the electrolysis process, wherein the production of chlorine will take place as soon as there is a water flow. Preferably, a chlorine sensor is provided, which chlorine sensor measures the chlorine content, whilst it may also control the electrolysis process. Since the dosaging of disinfectant is possible as a result of the natural presence of salts in the water, additional dosaging of salts will be required in the case of very low salt concentrations. The electrodes are preferably placed in the water conduit outside the storage tank, so that the production of water can continue even when maintenance work is being carried out.

The presence of the storage tank in particular makes it possible to build a plant which is capable of meeting peak requirements. The storage tank can thus be regarded as a buffer vessel, in which already pretreated water is present, because the water to be purified has already been passed through the filter unit. When there is a greater demand for purified water during a particular part of the day, for example during the morning hours at a hotel, the water present in the storage tank will be drawn from the storage tank and be discharged to the hotel. Consequently, the water level in the storage tank will decrease, which water level will be replenished in that water to be purified is supplied to the filter units, so that a constant discharge of purified water from the storage tank is ensured. Examples of said one or more purification units include a treatment with UV radiation, an active carbon filter, a treatment with ozone and/or a disinfectant dosaging system. In 60% of all cases the water to be purified will be fresh water, which can be adequately purified by means of the present device, and that at low investment, maintenance and energy costs.

One purification unit that is used is a disinfectant dosaging system, in particular a chlorine dosaging system, preferably based on anodic oxidation. In a special embodiment it is in particular desirable if the purification units comprise an active carbon filter and a chlorine dosaging system, which are connected in series. The chlorine dosaging system is preferably of the anodic oxidation type, wherein a desired amount of disinfectant, viz. chlorine compound, is delivered through an electrolysis process. Such a chlorine compound renders bacteria and other undesirable microorganisms harmless and ensures that the formation of a biofilm in the system of water pipes is suppressed. It is therefore desirable to pre-treat the water exiting the at least one filter unit first by passing it through an active carbon filter and subsequently dosaging disinfectant, whereupon the thus additionally treated and disinfected water is supplied to the storage tank. In a special embodiment, there is provided a circulation system comprising with sensors by means of which a correct dosaging of disinfectant is ensured.

The filter unit comprises one or more ultrafiltration membrane filters, and possibly also an active carbon filter, for removing harmful microorganisms and other contaminants. The active carbon filter functions to remove contaminants, thereby preventing the water from giving off an odour and improving the taste of the water. The filter unit used in the present invention may consist of a number of separate filter modules, usually filter modules which are connected in parallel. In addition to using the preferred selection of the ultrafiltration type it is also possible in certain embodiments to use reverse osmosis (RO), nanofiltration and/or microfiltration in one or more filter modules, depending on the type of contamination in the water to be purified and the amount of purified water to be delivered. The use of ultrafiltration units makes it possible to obtain water of consumption quality. If RO filtration units are used, also the salts that are naturally present in the water will be removed, which may endanger on the anodic oxidation of disinfectant, wherein use is made of the salts that are naturally present in the water to be purified. The dosaging of additional salt is desirable in such a situation.

It is in particular preferable if the filter unit is provided with a backflow line for removing the particles that adhere to the membrane filter and/or to the active carbon filter. Thus it is possible to clean one of the filter units whilst the other filter unit is used for supplying water to the storage tank. The water obtained from such a cleaning process can be discharged to the (already existing) sewer system via a separate drain, or be reused for a particular application, for example irrigation. Cleaning the filter units by means of the aforesaid backflow line is preferably carried out via an automatic system, in which case the automatic system is provided with a PLC.

In order to provide a device which can in principle be installed at any desired location, the storage tank preferably comprises a housing, in which housing a flexible container can be placed, for example a bag made of a high-quality plastic, also to be referred to as a closed tank liner. The housing, for example made of a steel construction assembled by means of the usual joining means, can be easily disassembled and therefore be installed within a short time at the desired location. After the housing has been installed, a flexible container, in particular a flexible water bag, is placed in the space enclosed by the housing, whereupon the container is filled with the treated water. Because of the weight of the water, the flexible container will subsequently take on more or less the shape of the housing. The treated water is thus completely shut off from the outside environment and protected against external contamination. It is also possible, however, to construct the storage tank such that the use of a flexible container is not necessary, for example by making the housing from a composite material, so that the water is in direct contact with the housing itself. The present device is further designed so that the capacity thereof can be easily increased by the additional placement of, for example, active carbon filters, via effective snap connections, membrane filters but also storage tanks.

The storage tank is preferably provided with a water circulation system for keeping the water in motion, thereby ensuring that the disinfectant is optimally mixed at all times.

Before the thus treated water is transported from the storage tank to the end user, it is possible in specific embodiments for the water to be additionally passed through a treatment unit, in particular a purification element in which a treatment with UV radiation takes place. The treatment with UV radiation provides an additional disinfecting step, so that the water quality of the water to be supplied is guaranteed.

When there is no demand for the thus purified water, for example during a particular part of the afternoon, of valve will shut off the supply when the adjusted maximum water level in the tank is reached. A return flow protection at the beginning of the installation ensures that the system cannot drain when the water pressure falls out and that the system will remain filled in all situations. In this way the installation will remain free from bacterial growth under all circumstances.

To maintain a constant water level in the storage tank, it is desirable that provisions be made for the installation of a measuring and control system (water management system), in which the water level in the storage tank is measured and the supply of water to be purified is linked thereto. In such an embodiment the supply of water to be purified will be initiated when the level of the water in the storage tank falls below a preset level, and water to be purified will be added to the contents of the storage tank. Such a measuring and control system makes it possible to make clever use of the expected demand for purified water. The expected consumption of purified water can be precisely estimated via such a water management system, realising an optimum use of the capacity of the storage tank.

To obtain an optimum effect of the filter units, the water pressure in the filter units needs to be at least 1.5 bar.

In a special embodiment, the storage tank is preferably disposed below ground level. Such a construction in particular has the advantage that use is made of the natural cooling effect of the ground.

In a special embodiment, the storage tank is preferably fully insulated so as to avoid temperature increases caused by high ambient temperatures. Such high temperatures, in particular temperatures in excess of 40 degrees Celsius, must be prevented on account of the undesirable bacterial growth that may ensue therefrom.

It is also possible, however, to cool the water to be purified to a desired water temperature via a heat exchanging process. Such a heat exchanging process may be incorporated in any of the pipes of the present device, for example in the supply line to the filter units, in the supply line to the storage tank, in the supply line to the purification unit or in the supply line to the end user.

Present invention further relates to a method for purifying water, which method is characterised in that the method comprises the following steps: supplying the water to be purified to at least one filter unit, supplying the water from the filter unit to one or more purification units, supplying the water thus treated to a storage tank, and discharging the thus treated water in the storage tank as purified drinking water.

In a special embodiment, part of the water discharged from the storage tank may be returned to the storage tank via a branch line.

The present method can in fact be carried out at any location where a water supply is available, for example a public water system pipe, a drilled well pipe or a point where water is directly drawn from surface water, for example river water.

It is furthermore desirable that a measuring and control system be present in the storage tank, said measuring and control system comprising a water level meter, wherein the supply of water to be purified to the filter units is started when the level of the water present in the storage tank falls below a preset level. Further special embodiment is of the present device and method are defined in the appended claims and described with reference to the figures.

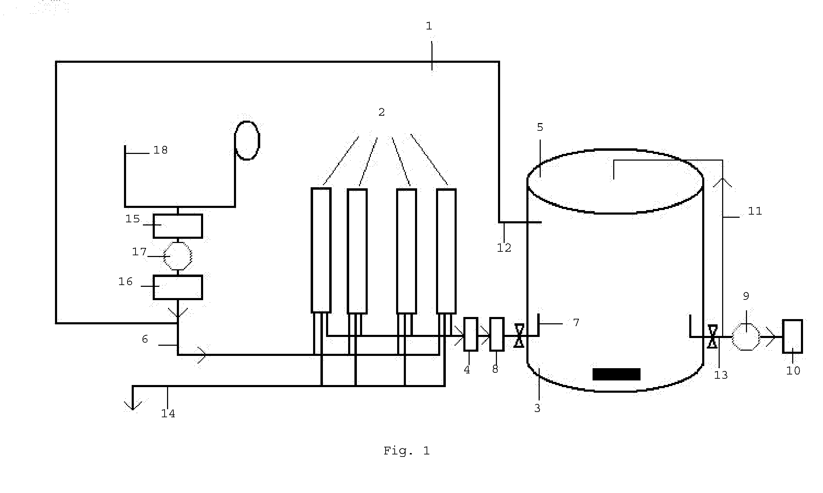

The present invention is schematically indicated at 1, it comprises, in succession, four parallel-connected filter units 2, purification units 4, 8, and a storage tank 3. The water 6 to be purified is supplied to the filter units 2, with the discharge line 7 of the purification units 4, 8 opening into the storage tank 3. The purification unit 4 is preferably of the active carbon filter type, and the purification unit 8 is of the chlorine dosaging type, preferably on the basis of an anodic oxidation system. The purification unit 8 preferably comprises a pipe and suitable pump units (provided with flow sensors), which make it possible to circulate the contents of the storage tank 3, the contents of which storage tank 3 thus being checked for chlorine content, whilst the dosaging of chlorine is stopped, if desirable, in particular if the chlorine sensor measures a value in excess of a preset value. Furthermore, means for dosaging salt to the contents of the storage tank 3 are provided. Disposed in the storage tank 3 is in particular a flexible container 5, which flexible container 5 is filled with the thus treated water. Water from a source 18, for example surface water or mains water, is supplied to the filter units 2 via a non-return valve 15, a water meter 17 and a coarse filter 16. The apparatuses indicated at 15, 16 and 17 must not be construed as being limitative. Furthermore, water meters 17 can be installed at any desired position in the system. The thus treated water is drawn from the container 5 via a pipe 13 and carried to an end user 10 via a pump 9. In a special embodiment, a branch line 11 may branch off from the pipe 13, which branch line 11 is connected to the storage tank 3. To maintain a constant water level in the storage tank 3, the storage tank 3 is provided with a level meter 12, which level meter 12 sends a signal to the supply line 6, and the supply of water to be purified to the filter units 2 is started when the water level in the storage tank 3 falls below a preset value. The filter units 2 are connected in parallel, so that they can be cleaned via a backflow pipe (not shown) without interrupting the supply of purified water to the end-user 10. Residue is discharged via a pipe 14. To prevent mechanical damage and minimise the effects of weather influences, a cover (not shown), in particular a roof, is provided for the storage tank 3, in particular if the storage tank is disposed outdoors. Since the storage tank 3 is provided with a flexible container 5, which contains the water exiting the filter units 2 via the purification units 4, 8, the system can be disassembled, which means that the present system can in principle installed at any desired location, for example in parking garages or other public spaces. Moreover, the present device is flexible to such an extent that separate units, in particular filter units 2, purification units 4, 8 and possibly also a storage tank 3 can be added in the case of an increasing demand for purified water. Although four parallel-connected filter units 2 are shown in the appended figure, it will be understood that filter units may also be used in different numbers. The same reasoning applies with regard to the storage tank 3 and the purification units 4, 8, which are not limited to the numbers shown in the figure. The storage tank 3 may furthermore be provided with means (not shown) for measuring the disinfectant content, which means determine, via a measuring and control system, whether disinfectant must be supplied to the storage tank. Overdosaging and underdosaging are prevented in this way. Furthermore it is desirable that a swirl installation (not shown) be present in the storage tank for keeping the water present in the storage tank 3 in motion. The keeping in motion of the water can be monitored via an electronic control system. Also other means besides the aforesaid swirl installation are suitable for keeping the water in motion, for example stirrer systems. The storage tank 3 is preferably so constructed, in particular thermally insulated, that the water present therein will not exceed a temperature of at most 40 degrees Celsius.

The water management system makes it possible to adapt the water supply to the next day at the end of the day (for example in the case of changes in the occupancy at hotels, weekend influences or holiday periods). The management system can also be set so that a particular supply of drinking water is buffered every evening. This extra amount of drinking water can be used, inter alia, for:
1) filling water bottles for private consumption the next day or for sales purposes in the region,
2) irrigating surrounding gardens,
3) changing the water in the swimming pool,
4) as germ-free fire-extinguishing water (sprinkler installation),
5) buffering water for a separate drinking water tap system, with separate drinking water tapping points provided at various location in the building,
6) making ice cubes.

## Claims

1. A device for purifying water, making use of a membrane filter and pipes and pumps needed for that purpose, which device comprises a supply line for water to be purified, which supply line is connected to at least one filter unit, the discharge line of which at least one filter unit is connected to a storage tank for the thus treated water, which storage tank is provided with a discharge line for purified water, whilst one or more purification units are disposed between the filter unit and the storage tank, is **characterized in that** at least one purification unit comprises a disinfectant dosaging system.

2. A device according to claim 1, **characterised in that** said disinfectant dosaging system is a chlorine dosaging system of the anodic oxidation type.

3. A device according to one or more of claims 1-2, **characterised in that** the disinfectant-dosaging purification unit comprises a water circulation system for effecting the mixing of disinfectant and the water present in the storage tank.

4. A device according to claim 1, **characterised in that** the filter unit comprises one or more ultrafiltration membrane filters, preferably that the filter unit is provided with a backflow line for removing the particles that adhere to the membrane filter.

5. A device according to one or more of claims 1-4, **characterised in that** the storage tank comprises a housing, in which housing a flexible, sealed tank liner container is present, in which the treated water is contained.

6. A device according to one or more of claims 1-5, **characterised in that** said one or more purification units are selected from the group of UV radiation treatment, a coarse particle filter, ozone treatment and an active carbon filter.

7. A device according to one or more of the preceding claims, **characterised in that** the storage tank is provided with a measuring and control system connected to the supply line of water to be purified and/or to the disinfectant dosaging system for maintaining a constant water level in the storage tank and/or maintaining a constant concentration of disinfectant in the water present in the storage tank.

8. A device according to one or more of the preceding claims, **characterised in that** the storage tank is provided with means for keeping the water present in the storage tank in motion, which means are in particular selected from a swirl installation or stirrer means, or a combination thereof.

9. A method for purifying water, making use of a membrane filter and pipes and pumps needed for that purpose, which method comprises the following steps: supplying the water to be purified to at least one filter unit, supplying the water from the filter unit to one or more purification units, supplying the water thus treated to a storage tank, and discharging the thus treated water in the storage tank as purified drinking water, **characterised in that** at least one purification unit comprises a disinfectant dosaging system.

10. A method according to claim 9, **characterised in that** said disinfectant dosaging is chlorine dosaging of the anodic oxidation type, in particular that said dosaging is carried out in such a manner that mixing of disinfectant and the water present in the storage tank takes place.

11. A method according to one or both of claims 9-10, **characterised in that** the filter unit comprises an ultrafiltration membrane filter.

12. A method according to any one of the preceding claims 9-11, **characterised in that** said one or more purification units comprise a UV radiation treatment, an active carbon filter, a coarse particle filter and/or an ozone treatment, or a combination thereof.

13. A method according to any one of the preceding claims 9-12, **characterised in that** a measuring and control system is present in the storage tank, which measuring and control system comprises a water level meter, wherein the supply of water to be purified to the filter units is started when the level of the water present in the storage tank falls below a preset level.

14. A method according to any one of the preceding claims 9-13, **characterised in that** a measuring and control system is present in the storage tank, which measuring and control system comprises a disinfectant meter, wherein the supply of disinfectant to the storage tank is started when the concentration of disinfectant in the water present in the storage tank falls below a preset level.

15. A method according to any one of the preceding claims 9-14, **characterised in that** the water present in the storage tank is kept in motion, in particular by using a swirl installation and/or stirrer means.
